# EUROPÄISCHE PATENTSCHRIFT

(11) **EP 2 265 440 B1**
(45) Veröffentlichungstag und Bekanntmachung des Hinweises auf die Patenterteilung: **25.01.2012**
(21) Anmeldenummer: 09727619.0
(22) Anmeldetag: 30.03.2009
(51) Int. Cl.: B32B 7/04, B32B 27/30, B65D 77/20

(54) **VERWENDUNG VON SCHMELZBAREN ACRYLAT-POLYMEREN ZUR HERSTELLUNG VON HAFTKLEBSTOFFSCHICHTEN**
USE OF MELTABLE ACRYLATE POLYMERS FOR PRODUCING CONTACT ADHESIVE LAYERS
UTILISATION DE POLYMÈRES D'ACRYLATE FUSIBLES POUR LA FABRICATION DE COUCHES D'ADHÉSIF

(30) Priorität: 31.03.2008 EP 08153759
(43) Veröffentlichungstag der Anmeldung: 29.12.2010
(73) Patentinhaber: BASF SE, 67056 Ludwigshafen (DE)
(72) Erfinder: BEYERS, Cornelis Petrus, 67122 Altrip (DE); KIRSCH, Stefan, Shanghai 201204 (CN); LICHT, Ulrike, 68309 Mannheim (DE)
(86) Internationale Anmeldenummer: PCT/EP2009/053736
(87) Internationale Veröffentlichungsnummer: WO 2009/121834

(56) Entgegenhaltungen:
- EP-A- 0 160 975
- EP-A- 0 445 641
- DE-A1-102004 058 070
- DE-A1-102005 035 979

## Beschreibung

Die vorliegende Erfindung betrifft die Verwendung von schmelzbaren Acrylat-Polymeren zur Herstellung von Haftklebstoffschichten in wiederverschließbaren Verpackungen. Die Erfindung betrifft außerdem Mehrschichtfolien, die eine Haftklebstoffschicht auf Basis von schmelzbaren Acrylat-Polymeren aufweisen, ein Verfahren zur Herstellung dieser Mehrschichtfolien, sowie die Verwendung dieser Mehrschichtfolien zur Herstellung von wiederverschließbaren Verpackungen.

Wiederverschließbare Verpackungen mit einem Verschlussmechanismus, der auf Haftklebstoffen beruht, sind seit langem bekannt, beispielsweise aus EP-A 160975, EP-A 1460117, EP-A 1676785, BE 1010387, WO 90/07427, WO 2004/014757 und WO 2007/012621.

Wiederverschließbare Verpackungen weisen im Allgemeinen einen Behälter (tray), der das zu verpackende Gut enthält, und eine mit dem Behälter über eine Versiegelung verbundene Verschlussfolie, gemeinhin auch Deckelfolie, auf, d. h. der Behälter und die Verschlussfolie sind über eine Siegelschicht miteinander dauerhaft verbunden. Beim erstmaligen Öffnen der Verpackung wird eine zwischen der Versiegelung und dem Behälter oder zwischen der Versiegelung und der Verschlussfolie angeordnete, permanent klebrige Klebstoffschicht (Haftklebstoffschicht) freigelegt, z. B. durch Aufreißen der Siegelschicht in den Bereichen der Siegelnähte. Die permanent klebrige Klebstoffschicht gewährleistet ein wiederholbares Öffnen und Schließen der Verpackung.

Typischerweise ist die Haftklebstoffschicht bei wiederverschließbaren Verpackungen in ein Folienmaterial integriert. Dieses Folienmaterial weist eine auf einem folienartigen Träger (Trägerfolie) angeordnete Haftklebstoffschicht auf, die ihrerseits durch eine siegelbare Schicht abgedeckt wird. Zwischen dem eigentlichen Träger und der Haftklebstoffschicht, aber auch zwischen der siegelbaren Schicht und der Haftklebstoffschicht können Barriereschichten angeordnet sein. Dieses Folienmaterial kann sowohl den Behälter bilden als auch die Deckelfolie.

An die Haftklebstoffschicht wird eine Reihe von Anforderungen gestellt. Zu einen soll die Klebewirkung auch nach wiederholtem Öffnen und Verschließen ausreichend stark sein, um eine gute Wiederverschließbarkeit zu gewährleisten. Andererseits sollen die beim Öffnen auftretenden Maximalkräfte nicht zu hoch sein, um ein gleichmäßiges, möglichst nicht ruckartiges Öffnen zu gewährleisten, nicht zuletzt weil ansonsten die Gefahr eines Reißens der Verschlussfolie besteht. Ferner sollte die Haftklebstoffschicht möglichst geruchsarm sein. Außerdem sollte der Haftklebstoff leicht in die gewünschte Verschlussanordnung eingearbeitet werden können.

Die im Stand der Technik für die Herstellung wiederverschließbarer Verpackungen verwendeten Haftktebstoffe vermögen diese Anforderungen oftmals nicht oder nur teilweise zu erfüllen. Insbesondere ist es bei vielen Haftklebstoffen, beispielsweise bei solchen auf Basis von Styrol-Butadien-Blockcopolymeren oder Styrol-Isopren-Blockcopolymeren, erforderlich, zwischen der Siegelschicht und der Haftklebstoffschicht eine Barriereschicht vorzusehen, um einen Kontakt migrationsfähiger Bestandteile der Klebeschicht, wie Weich- und Klebrigmacher, mit dem verpackten Gut zu verhindern. Hierdurch erhöhen sich Aufwand und damit auch Kosten für die Herstellung der Verpackung. In vielen Fällen lässt wiederum die Klebewirkung nach mehrmaligem Öffnen und Verschließen deutlich nach, so dass ein wirksamer Verschluss nicht mehr gewährleistet ist. Außerdem ist eine Geruchsfreiheit gewünscht, die insbesondere bei Verwendung Vinylacetat-haltiger Haftklebstoffe und Klebstoffe auf Basis der oben genannten Blockcopolymere nicht gegeben ist.

Aufgabe der Erfindung waren daher geruchsfreie Haftklebstoffe für wiederverschließbare Verpackungen bereitzustellen, welche die eingangs genannten Kriterien erfüllen und die Nachteile, die bei den für diesen Zweck üblicherweise verwendeten Haftklebstoffe auftreten, lösen.

Es wurde nun gefunden, dass diese und weitere Aufgaben durch die im Folgenden näher beschriebenen Acrylat-Polymere gelöst werden.

Dementsprechend betrifft die vorliegende Erfindung die Verwendung von Acrylat-Polymeren mit einer Glasübergangstemperatur unterhalb -20°C, bestimmt nach ASTM-D 3418/82, die 1 bis 30 mmol einpolymerisierten Fotoinitiator pro kg Acrylat-Polymer enthalten, zur Herstellung von Haftklebstoffschichten in wiederverschließbaren Verpackungen, wobei das Acrylat-Polymer aus monoethylenisch ungesättigten Monomeren M und dem Fotoinitiator aufgebaut ist, wobei die Monomere M umfassen:
a) wenigstens 80 Gew.-%, bezogen auf das Gesamtgewicht des Acrylat-Polymeren, Monomere A, ausgewählt unter C₃-C₂₀-Alkylacrylaten,
b) 1 bis 20 Gew.-% Monomere B, ausgewählt unter C₁-C₄-Alkylmethacraclyaten, Methylacrylat und Ethylacrylat;
c) bis zu 10 Gew.-% nicht-aromatische, monoethylenisch ungesättigte Monomere C, die ausgewählt sind unter monoethylenisch ungesättigten C₃-C₈-Monocarbonsäuren, Amiden monoethylenisch ungesättigter C₃-C₈-Monocarbonsäuren, monoethylenisch ungesättigten C₄-C₈-Dicarbonsäuren, den Mono-C₁-C₂₀-alkylestern monoethylenisch ungesättigter C₄-C₈-Dicarbonsäuren, und den Hydroxyalkylestern monoethylenisch ungesättigter C₃-C₈-Monocarbonsäuren;
wobei sich die Gewichtsanteile der Monomere A, B und C zu 100 Gew.-% addieren.

Die Erfindung ist mit einer Reihe von Vorteilen verbunden. So erlauben die erfindungsgemäß verwendeten Acrylat-Polymere die Herstellung geruchsfreier wiederverschließbarer Verpackungen, die insbesondere für Lebensmittel geeignet sind, ohne dass eine Barriereschicht zwischen der Haftklebstoffschicht und der Siegelschicht erforderlich ist. Die Acrylat-Polymere sind geruchsfrei und erlauben somit die Herstellung geruchsarmer Verpackungen. Sie gewährleisten gute Gebrauchseigenschafen, d. h. eine gute Wiederverschließbarkeit nach mehrmaligem Gebrauch und ein gleichmäßiges Öffnen ohne großen Kraftaufwand.

Eine gute Wiederverschließbarkeit nach mehrmaligem Gebrauch ist dann gewährleistet, wenn die Klebekraft auch nach 10-maligem Öffnen/Schließen für einen zuverlässigen Verschluss ausreicht. In der Regel ist dies der Fall bei einer Klebekraft, bestimmt nach Finat Nr. 1 (180° Winkel, konstante Abzuggeschwindigkeit 300 mm/min), von wenigstens 0,5 N/10 mm. Ein gleichmäßiges Öffnen ist in der Regel dann gewährleistet, wenn die maximale Kraft beim Öffnen, bestimmt nach Finat Nr. 1 (180° Winkel, konstante Abzuggeschwindigkeit 300 mm/min), 15 N/10 mm, insbesondere 10 N/mm und speziell 8 N/mm nicht überschreitet.

Die erfindungsgemäß verwendeten Acrylat-Polymere sind aus dem Stand der Technik bekannt, beispielsweise aus der EP-A 246848, EP-A 445641, WO 01/23489, der WO 2004/058834 und der WO 2006/058694.

Die erfindungsgemäß verwendeten Acrylat-Polymere enthalten wenigstens 80 Gew.-%, insbesondere wenigstens 85 Gew.-% und speziell wenigstens 90 Gew.-%, bezogen auf das Gesamtgewicht des Acrylat-Polymeren C₃-C₂₀-Alkylacrylate, einpolymerisiert. Diese Monomere werden im Folgenden als Monomere A bezeichnet.

Der Alkylrest in den C₃-C₂₀-Alkylacrylaten ist vorzugsweise über ein primäres oder sekundäres C-Atom an das Sauerstoffatom der Acryloyloxy-Gruppe gebunden und weist insbesondere 3 bis 12 C-Atome und speziell 4 bis 10 C-Atome auf. Geeignet sind auch Gemische von C₃-C₂₀-Alkylacrylaten, worin die Alkylreste die gleiche oder eine unterschiedliche Anzahl an C-Atomen aufweisen, wobei der Mittelwert der C-Atome vorzugsweise im Bereich von 3 bis 12 und insbesondere im Bereich von 4 bis 10 liegt (molares Mittel). Beispiele für bevorzugte C₃-C₂₀-Alkylacrylate sind Propylacrylat, Isopropylacrylat, n-Butylacrylat, Isobutylacrylat, 2-Butylacrylat, n-Pentylacrylat, 2-Pentylacrylat, Isopentylacrylat, 2-Methylpentylacrylat, n-Hexylacrylat, 2-Hexylacrylat, 2-Methylhexylacrylat, 2-Ethylhexylacrylat, n-Heptylacrylat, 2-Heptylacrylat, 2-Methylheptylacrylat, 2-Propylheptylacrylat, n-Octylacrylat, Isooctylacrylat, n-Nonylacrylat, Isononylacrylat, n-Decylacrylat und Isodecylacrylat sowie Gemische dieser Monomere. Besonders bevorzugt ist das C₃-C₂₀-Alkylacrylat unter n-Butylacrylat, Isobutylacrylat, 2-Butylacrylat, n-Hexylacrylat, 2-Hexylacrylat, 2-Ethylhexylacrylat, 2-Propylheptylacrylat und deren Gemischen ausgewählt.

Neben den vorgenannten C₃-C₂₀-Alkylacrylaten und den Fotoinitiatoren enthalten die Acrylat-Polymere weitere monoethylenisch ungesättigte Monomere B und gege-benenfalls von den Monomeren A und B verschiedene Monomere C ein polymerisiert.

Die Monomere B sind C₁-C₄-Alkylmethacrylate s.4a. Methacrylat und Ethylacrylat, insbesondere Methylacrylat und Methylmethacrylat. Ihr Anteil, bezogen auf das Gesamtgewicht des Acrylat-Polymers liegt im Bereich von 1 bis 20 Ges.-% und insbesondere im Bereich von 5 bis 15 Gew.-%, bezogen auf die Gesamtmenge, der das Acrylat-Polymer bildenden Monomere.

Die Monomere C sind nicht-aromatisch und sauer oder neutral. Hierzu zählen insbesondere solche mit einer erhöhten Wassertöslichkeit von in der Regel wenigstens 80 g/l bei 25 °C und 1013 mbar. Ihr Anteil, bezogen auf das Gesamtgewicht des Acrylat-Polymers, wird 10 Gew.-% nicht überschreiten und liegt häufig im Bereich von 0,1 bis 10 Gew.-% und insbesondere im Bereich von 0,5 bis 8 Gew.-%, bezogen auf die Gesamtmenge der das Acrylat-Polymer bildenden Monomere.

Als saure Monomere C kommen monoethylenisch ungesättigte C₃-C₈-Monocarbonsäuren wie Acrylsäure und Methacrylsäure, monoethylenisch ungesättigte C₄-C₈-Dicarbonsäuren wie Itaconsäure, Maleinsäure oder Fumar-saure und Mono-C₁-C₂₀-alkylester, insbesondere Mono-C₁-C₆-alkylester monoethylenisch ungesättigter C₄-C₈-Dicarbonsäuren, wie Monomethylmaleinat, Monobutylmaleinat und Monomethylfumarat in Betracht.

Als neutrale Monomere C kommen die Amide monoethylenisch ungesättigter C₃-C₈-Monocarbonsäuren wie Acrylamid und Methacrylamid, sowie Hydroxyalkylester monoethylenisch ungesättigter C₃-C₈-Monocarbonsäuren wie Hydroxyethylacrylat, Hydroxyethylmethacrylat, Hydroxypropylacrylat und Hydroxypropylmethacrylat in Betracht.

Die erfindungsgemäß verwendeten Acrylat-Polymere enthalten weiterhin wenigstens einen Fotoinitiator einpolymerisiert. Derartige Acrylat-Polymere sind mit UV-Licht vernetzbar. Durch Bestrahlung mit energiereichem Licht, insbesondere UV-Licht, bewirkt der Fotoinitiator eine Vernetzung der Acrylat-Polymere, vorzugsweise durch eine chemische Pfropfreaktion des Fotoinitiators mit einer räumlich benachbarten Polymerkette.

Vorzugsweise ist der Photoinitiator so gewählt, dass er bei Bestrahlung mit UV-Licht keine niedermolekularen Bestandteile abspaltet. Bevorzugt handelt es sich um einen wie Methylmethacrylat, Ethylmethacrylat, Propylmethacrylat, Isopropylmethacrylat, n-Butylmethacrylat und tert.-Butylmethacrylat

H-Abstraktor. Insbesondere handelt es sich bei dem Fotoninitator um einen Photoinitiator vom Norrish Typ 2. Insbesondere ist der Fotoinitiator so gewählt, dass eine Vernetzung durch Einschub einer Carbonylgruppe des Fotoinitiators in eine benachbarte C-H-Bindung unter Ausbildung einer -C-C-O-H Gruppierung erfolgt.

Vorzugsweise ist der Fotoinitiator so gewählt, dass er bei Bestrahlung mit UV-Licht im Wellenlängenbereich von 220 bis 350 nm, insbesondere im Bereich von 250 bis 300 nm aktiviert werden kann. Mit anderen Worten, der Fotoinitiator ist vorzugsweise so gewählt, dass seine Hauptabsorbtionsbande im Bereich von 220 bis 350 nm, insbesondere im Bereich von 250 bis 300 nm liegt.

Erfindungsgemäß enthalten die Acrylat-Polymere 1 bis 30 mmol, insbesondere 2 bis 20 mmol und speziell 5 bis 15 mmol Fotoinitiator pro kg Acrylat-Polymer einpolymerisiert.

Bevorzugte copolymerisierbare Fotoinitiatoren sind Acetophenon- und Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryloyl- oder Methacrylgruppe.

Die ethylenisch ungesättigte Gruppe kann direkt an den Phenylring des Acetophenonoder Benzophenonderivats gebunden sein. Im Allgemeinen befindet sich zwischen Phenylring und ethylenisch ungesättigter Gruppe eine Spacergruppe (Abstandshalter). Die Spacergruppe kann z. B. bis 30 C-Atome enthalten.

Geeignete Acetophenon- oder Benzophenonderivate sind z. B. in EP-A 346734, EP-A 377199 und EP-A 486897 beschrieben, auf die hiermit Bezug genommen wird. Bevorzugte Acetophenon- und Benzophenonderivate sind solche der Formel I 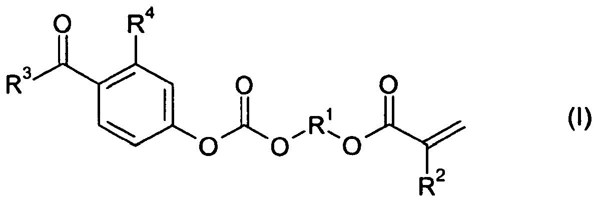 worin R¹ für einen bivalenten organischen Rest mit wenigstens 2 und bis zu 30 C-Atomen, R² für ein H-Atom oder eine C₁-C₄-Alkylgruppe und R³ für eine gegebenenfalls substituierte Phenylgruppe oder eine C₁-C₄-Alkylgruppe und R⁴ für Wasserstoff steht, oder R³ bildet zusammen mit R⁴ eine C₂-C₄-Alkylengruppe, worin eine der Carbonylgruppe nicht benachbarte CH₂-Gruppe durch Sauerstoff ersetzt sein kann.

Gegebenenfalls substituiert bedeutet, dass die Phenylgruppe 1, 2, 3 oder 4 unter Halogen, C₁-C₄-Alkyl und C₁-C₄-Alkoxy ausgewählte Substituenten aufweisen kann.

C₁-C₄-Alkyl steht für einen gesättigten Kohlenwasserstoffrest mit 1 bis 4 C-Atomen wie Methyl, Ethyl, n-Propyl, 2-Propyl, n-Butyl, 2-Butyl und 2-Methylpropyl.

Ein bivalenter organischer Rest steht für einen aromatischen, aliphatischen oder cycloaliphatischen organischen Rest, der 2 bis 30 Kohlenstoffatome aufweist und der vorzugsweis aus 2 bis 30 Kohlenstoffatomen, 0 bis 4 Sauerstoffatomen und Wasserstoffatomen aufgebaut ist. Bevorzugt handelt es sich um einen aliphatischen oder cycloaliphatischen organischen Rest und insbesondere um einen Alkylen-Rest.

Alkylen steht für einen bivalenten gesättigten Kohlenwasserstoffrest, der linear oder verzweigt ist und der in der Regel 2 bis 30, vorzugsweise 2 bis 10 und insbesondere 2 bis 8 C-Atome aufweist. Beispiele für Alkylen sind 1,2-Ethandiyl, 1,2-Propandiyl, 1,3-Propandiyl, 1,4-Butandiyl, 1,5-Pentandiyl, 1,6-Hexandiyl, 1,7-Heptandiyl, 2-Methyl-1,4-butandiyl und 1,8-Octandiyl.

R¹ steht besonders bevorzugt für eine Alkylengruppe mit 2 bis 30 und vorzugsweise 2 bis 10 C-Atomen, insbesondere für eine C₂-C₈-Alkylengruppe. R² steht insbesondere für Wasserstoff oder Methyl. R³ steht besonders bevorzugt für eine Methylgruppe oder eine Phenylgruppe.

Vorzugsweise enthalten die Acrylat-Polymere neben den Fotoinitiatoren im Wesentlichen keine, d. h. zu weniger als 1 Gew.-% , insbesondere weniger als 0,1 Gew.-%, bezogen auf das Acrylat-Polymer, aromatische Monomere einpolymerisiert.

Vorzugsweise ist das erfindungsgemäß zur Herstellung der Haftklebstoffschicht verwendete Acrylat-Polymer, d. h. das Acrylat-Polymer vor der UV-Bestrahlung, im Wesentlichen unvernetzt. Dementsprechend enthalten die Acrylat-Polymere vorzugsweise im Wesentlichen keine, d. h. weniger als 1 Gew.-%, insbesondere weniger als 0,1 Gew.-%, bezogen auf das Acrylat-Polymer, mehrfach ethylenisch ungesättigten Monomere einpolymerisiert.

Vorzugsweise enthalten die Acrylat-Polymere im Wesentlichen keine, d. h. zu weniger als 1 Gew.-%, insbesondere weniger als 0,1 Gew.-%, bezogen auf das Acrylat-Polymer, Monomere einpolymerisiert, die von den Monomeren A, B, C und dem Fotoinitiator verschieden sind. Mit anderen Worten, das Acrylat-Polymer ist zu wenigstens 99 Gew.-%, insbesondere zu wenigstens 99,9 Gew.-% aus den Monomeren A, B, C und dem Fotoinitiator aufgebaut.

Insbesondere ist das Acrylat-Polymer aus monoethylenisch ungesättigten Monomeren M und dem Fotoinitiator aufgebaut, wobei die Monomere M umfassen:
a) wenigstens 80 Gew.-%, z. B. 80 bis 99 Gew.-%, insbesondere 85 bis 95 Gew.-%, wenigstens eines Monomers A wie zuvor definiert, das insbesondere unter C₄-C₁₀-Alkylacrylaten ausgewählt ist, worin der Alkylrest über ein primäres oder sekundäres C-Atom an das Sauerstoffatom der Acryloyloxygruppe gebunden ist;
b) 1 bis 20 Gew.-%, insbesondere 5 bis 15 Gew.-% wenigstens eines Monomers B, ausgewählt unter C₁-C₄-Alkylmethacraclyaten, Methylacrylat und Ethylacrylat, insbesondere unter Methylmethacrylat und Methylacrylat;
c) bis zu 10 Gew.-%, insbesondere 0 bis 8 Gew.-% oder 0,1 bis 8 Gew.-% ein oder mehrere, nicht-aromatische, monoethylenisch ungesättigte Monomere C, die vorzugsweise unter monoethylenisch ungesättigten C₃-C₈-Monocarbonsäuren, Amiden monoethylenisch ungesättigter C₃-C₈-Monocarbonsäuren, monoethylenisch ungesättigten C₄-C₈-Dicarbonsäuren, den Mono-C₁-C₂₀-alkylestern monoethylenisch ungesättigter C₄-C₈-Dicarbonsäuren, und den Hydroxyalkylestem monoethylenisch ungesättigter C₃-C₈-Monocarbonsäuren und speziell unter Acrylsäure und Methacrylsäure sowie den Hydroxyalkylestem der Acrylsäure und der Methacrylsäure ausgewählt sind;
wobei sich die Gewichtsanteile der Monomere A, B und C zu 100 Gew.-% addieren.

Vorzugsweise sind die Acrylat-Polymere bei erhöhter Temperatur von beispielsweise 130 °C dünnflüssig, d. h. sie lassen sich unzersetzt auf diese Temperatur oder darüber erhitzen und weisen dann eine geringe Viskosität auf. Vorzugsweise lassen sich die Acrylat-Polymere auf eine Temperatur bis zu 250 °C oder darüber unzersetzt erhitzen. Die Nullviskosität der Acrylat-Polymere bei 130 °C liegt insbesondere im Bereich von 10 bis 200 Pa·s. Bevorzugte Acrylat-Polymere weisen bei 130 °C eine Nullviskosität im Bereich von 20 bis 150 Pa·s auf. Die Nullviskositäten können durch Schwingungsrheometrie bestimmt werden, die Auswertung der Daten erfolgt nach Carreau-Gahleitner.

Das Acrylat-Polymer hat vorzugsweise einen K-Wert von 20 bis 90, besonders bevorzugt von 30 bis 80, und insbesondere von 40 bis 70, gemessen in Tetrahydrofuran (1 gew.-%ige Lösung, 21 °C). Der K-Wert nach Fikentscher (Fikentscher - Cellulosechemie 1932, Bd. 13, S. 58-64 und S. 71-74) wird über die Viskosität von Polymerlösungen bestimmt und ist ein Maß für das Molekulargewicht des Polymeren.

Das zahlenmittlere Molekulargewicht der erfindungsgemäß verwendeten Acrylat-Polymere liegt typischerweise im Bereich von 5000 bis 100000 Dalton, insbesondere im Bereich von 10000 bis 50000 Dalton. Das gewichtsmittlere Molekulargewicht der erfindungsgemäß verwendeten Polymere liegt typischerweise im Bereich von 20000 bis 1000000 Dalton, insbesondere im Bereich von 50000 bis 500000 Dalton. Die hier angegebenen Molekulargewichte sind solche, wie sie mittels Gelpermeationschromatographie (GPC) nach Standardmethoden bestimmt werden.

Die Glasübergangstemperatur (Tg) der erfindungsgemäß verwendeten Acrylat-Polymere beträgt vorzugsweise -60 bis -20 °C, insbesondere -55 bis -25 °C und besonders bevorzugt -50 bis -30 °C. Die Glasübergangstemperatur des Polymeren A lässt sich nach üblichen Methoden wie Differentialthermoanalyse oder Differential Scanning Calorimetrie (s. z. B. ASTM 3418/82, sog. "midpoint temperature") bestimmen. Die Glasübergangstemperatur kann der Fachmann durch Auswahl geeigneter Monomere bzw. Monomerkombinationen bestimmen und über die Gleichung von Fox unter Zugrundelegung der bekannten Glasübergangstemperaturen von Homopolymeren derjenigen Monomere, aus denen das Acrylat-Polymer aufgebaut ist, berechnen.

Die Acrylat-Polymere werden typischerweise durch Copolymerisation der monomeren Komponenten (konstituierende Monomere, d. h. C₃-C₂₀-Alkylacrylate, Fotoinitiator und ggf. weitere Monomere B und C) unter den Bedingungen einer radikalischen Polymerisation hergestellt. Hierzu polymerisiert man die Monomere unter Verwendung der üblichen Polymerisationsinitiatoren sowie gegebenenfalls von Reglern, wobei man bei den üblichen Temperaturen in Substanz oder in Lösung polymerisiert.

Vorzugsweise werden die Polymere durch Polymerisation der Monomere in Lösungsmitteln (Lösungspolymerisation), insbesondere in Lösungsmitteln eines Siedebereichs von 50 bis 150 °C, vorzugsweise von 60 bis 120 °C erhalten. Die Lösungspolymerisation erfolgt unter Verwendung der üblichen Mengen an Polymerisationsinitiatoren, die im Allgemeinen bei 0,01 bis 10 Gew.-%, insbesondere bei 0,1 bis 4 Gew.-%, bezogen auf das Gesamtgewicht der Monomeren, liegt.

Die Polymerisation der das Acrylat-Polymer konstituierenden Monomere kann ein- oder mehrstufig, nach Batch- oder Zulaufverfahren durchgeführt werden. Vorzugsweise schließt sich der eigentlichen Polymerisation der monomeren Komponenten eine Nachpolymerisation zur Verringerung des Restmonomeren-Gehalts an.

Als Lösungsmittel können insbesondere Alkohole, wie Methanol, Ethanol, n-Propanol, iso-Propanol, n-Butanol und iso-Butanol, vorzugsweise Isopropanol und/oder Isobutanol, Kohlenwasserstoffe wie Toluol und insbesondere Benzine eines Siedebereichs von 60 bis 120 °C, Ketone wie Aceton, Methylethylketon, Methylisobutylketon, C₁-C₆-Alkylester aliphatischer C₁-C₄-Mono- und C₂-C₆-Dicarbonsäuren, insbesondere Essigsäureethylester, sowie Gemische von Lösungsmitteln der genannten Art eingesetzt werden.

Als Polymerisationsinitiatoren kommen bei der Lösungspolymerisation beispielsweise Azoverbindungen, Peroxide und Hydroperoxide wie Ketonperoxide, Acylperoxide, Peroxoalkylester aliphatischer Carbonsäuren, Alkylperoxide und -hydroperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die Polymere können dann in lösungsmittetfreiem Zustand, d. h. als Schmelzen, eingesetzt werden. In manchen Fällen ist es auch von Vorteil, die Polymere durch Polymerisation in Substanz, d. h. ohne Mitverwendung eines Lösungsmittels, herzustellen, wobei man chargenweise oder auch kontinuierlich, z. B. nach den Angaben der US-PS 4,042,768, arbeiten kann.

Die erfindungsgemäß verwendeten Acrylat-Polymere sind vorzugsweise im Wesentlichen lösungsmittelfrei und werden vorzugsweise im Wesentlichen lösungsmittelfrei eingesetzt. Im Wesentlichen lösungsmittelfrei bedeutet, dass der Restgehalt an Lösungsmitteln, z. B. organischen Lösungsmitteln und/oder Wasser, unter 1 Gew.-Teilen, insbesondere unter 0,5 Gew.-Teilen, besonders bevorzugt unter 0,2 Gew.-Teilen, ganz besonders bevorzugt unter 0,1 Gew.-Teilen bzw. unter 0,08 Gew.-Teilen, bezogen auf 100 Gew.-Teile Acrylat-Polymer bzw. bezogen auf 100 Gew.-Teile der verwendeten Klebstoffzusammensetzung, beträgt. Vorzugsweise ist der Gesamtanteil an flüchtigen organischen Bestandteilen (VOC-Gehalt, bestimmt mittels Gaschromatographie nach DIN ISO 11890-2) unterhalb 2000 ppm, speziell unterhalb 1000 ppm oder unterhalb 800 ppm (Gewichtsteile). Als flüchtige Verbindungen gelten solche, die bei Normaldruck einen Siedepunkt unterhalb 250 °C aufweisen.

Die Acrylat-Polymere eignen sich zur Herstellung von permanent klebrigen Beschichtungen, d. h. als Haftklebstoffe, zur Herstellung wiederverschließbarer Verpackungen. Die Acrylat-Polymere werden zu diesem Zweck als solche oder als Klebstoffzusammensetzung zusammen mit Klebstoffadditiven wie Füllstoffen, Farbstoffen, Tackifiern (klebrigmachende Harze) oder Verlaufsmitteln eingesetzt. Der Einsatz von Verlaufsmitteln, Füllstoffen und Tackifiem ist jedoch nicht erforderlich. Daher werden in einer bevorzugten Ausführungsform die Acrylat-Polymere zur Herstellung der Haftklebstoffschicht im Wesentlichen ohne Tackifier eingesetzt. Ebenfalls bevorzugt werden die Acrylat-Polymere ohne Verlaufsmittel eingesetzt. Ebenfalls bevorzugt werden die Acrylat-Polymere im Wesentlichen ohne Füllstoffe eingesetzt.

In einer besonders bevorzugten Ausführungsform werden die erfindungsgemäßen Acrylat-Polymere als solche, d. h. im Wesentlichen frei von weiteren Bestandteilen eingesetzt. "Im Wesentlichen frei" bzw. "im Wesentlichen ohne" bedeutet, dass der Anteil der jeweiligen Komponente weniger als 1 Gew.-%, insbesondere weniger als 0,5 oder 0,1 Gew.-%, bezogen auf das Acrylat-Polymer, ausmacht.

Wie bereits eingangs erläutert weisen die wiederverschließbaren Verpackungen typischerweise wenigstens ein Verpackungselement mit einer Haftklebstoffschicht auf. Dieses Verpackungselement ist typischerweise als Mehrschichtfolie, im Folgenden auch als Laminat oder Folienlaminat bezeichnet, ausgestaltet. Diese Mehrschichtfolien umfassen:
a) eine Trägerfolie,
b) eine Haftklebstoffschicht, und
c) eine siegelbare Schicht,
wobei die Haftklebstoffschicht zwischen der Trägerfolie und der siegelbaren Schicht angeordnet ist.

Die Haftklebstoffschicht ist auf dem Träger angeordnet. Zwischen Träger und Haftklebstoffschicht können sich weitere Schichten, z. B. Migrationssperren für Gase oder Wasser, oder Haftvermittler befinden. In einer bevorzugten Ausführungsform werden derartige weitere Schichten nicht benötigt und die Haftklebstoffschicht befindet sich unmittelbar auf dem Träger. Entsprechende Schichten können z. B. auch auf der Rückseite des Trägers aufgebracht sein.

Zwischen Haftklebstoffschicht und siegelbarer Schicht können ebenfalls ein oder mehrere weitere Schichten angeordnet sein, z. B. Schichten, die eine Barriere gegen unerwünschte Gase (Sauerstoff, Wasserdampf) bilden, einen UV-Schutz gewährleisten, als Sauerstofffänger oder Migrationsschutz wirken oder als Haftvermittler dienen. In einer bevorzugten Ausführungsform werden derartige weitere Schichten nicht benötigt und die siegelbare Schicht kann unmittelbar auf der Haftklebstoffschicht aufgebracht sein.

Erfindungsgemäß umfasst die Haftklebstoffschicht wenigstens ein Acrylat-Polymer wie zuvor definiert. Dieses wird zur Einstellung seiner Klebeigenschaften durch UV-Strahlung vernetzt. Derartige Mehrschichtfolien sind neu und ebenfalls Gegenstand der vorliegenden Erfindung. Insbesondere besteht die Haftklebstoffschicht aus dem durch UV-Strahlung vernetzten Acrylat-Polymeren.

Bevorzugt sind Haftklebstoffschichten, die durch Bestrahlung mit UV-Licht im Wellenlängenbereich von 220 bis 350 nm, insbesondere im Bereich von 250 bis 300 nm erhältlich sind.

Bevorzugt sind Haftklebstoffschichten, die durch Bestrahlung mit UV-Licht mit einer Strahlungsdosis von 0,5 bis 20 mJ/cm², insbesondere 1 bis 15 mJ/cm² und speziell 1,5 bis 10 mJ/cm² erhältlich sind.

Die Dicke der Haftklebstoffschicht beträgt in der Regel 1 bis 50 µm, insbesondere 2 bis 40 µm und speziell 5 bis 30 µm. Dies entspricht einer mittleren Beschichtungsstärke von 1 bis 50 g/m², insbesondere 2 bis 40 g/m² und speziell 5 bis 30 g/m² Haftklebstoff bzw. Acrylat-Polymer.

Bei dem Träger handelt es sich in der Regel um eine Polymerfolie, die gegebenenfalls mit anderen Materialien einen Verbund bilden kann, z. B. mit Metall (z. B. metallisierte Polymerfolien) oder mit Papier.

Insbesondere kommen Polymerfolien, vorzugsweise transparente Polymerfolien oder deren Verbunde mit anderen Materialien, insbesondere metallisierte Polymerfolien, in Betracht. Beispiele für Polymerfolien sind z. B. Polyolefin-, Polyester- oder Polyacetatfolien. Geeignet sind auch Co-Extrudate verschiedener Polymere, z. B. Polyester/Polyacetat-Folien.

Als Polyolefinfolien kommen z. B. solche aus Polyethylen, Polypropylen, insbesondere orientiertem Polypropylen in Betracht. Bevorzugt sind Polyesterfolien, z. B. solche aus Polyalkylenphthalat oder -therephthalat, wobei Folien aus Polyethylentherephthalat (PET), das kristallin (c-PET) oder amorph (a-PET) sein kann, besonders bevorzugt sind.

In einer bevorzugen Ausführungsform der Erfindung ist die Trägerfolie eine transparente Polymerfolie, vorzugsweise eine transparente Polyolefin-, Polyester- oder Polyacetatfolie, insbesondere eine transparente Polyolefinfolie und speziell eine transparente Polyethylen- oder Polypropylenfolie. Transparent im Sinne der Erfindung bedeutet, dass die Folie unbedruckt, nicht mit einem lichtundurchlässigen Material wie Papier, einer bedruckten Folie oder Metallfolie, kaschiert und im Wesentlichen ungefärbt ist. Im Wesentlichen ungefärbt, bedeutet, dass die Polymerfolie weniger als 0,1 Gew.-%, insbesondere weniger als 0,05 Gew.-% und speziell weniger als 0,01 Gew.-%, bezogen auf die Masse der Polymerfolie, farbgebende Bestandteile wie Farbstoffe oder Pigmente enthält.

Die Dicke des Trägers beträgt vorzugsweise 5 bis 500 µm, besonders bevorzugt 10 bis 300 µm, insbesondere 15 bis 250 µm. Im Falle einer Deckelfolie wird die Dicke des Trägers typischerweise im Bereich von 5 bis 100 µm liegen. Sofern das Folienmaterial den Behälter bildet, wird die Dicke des Trägers typischerweise im Bereich von 50 bis 500 µm liegen.

Der Träger kann z. B. auch bedruckt sein oder mit einer bedruckten Folie kaschiert sein.

Der Träger kann auch mit einem Primer vorbehandelt sein. Ein Primer ist jedoch in der Regel nicht erforderlich.

In den erfindungsgemäßen Mehrschichtfolien ist auf der Haftklebstoffschicht eine siegelbare Schicht angeordnet. "Siegelbar" heißt, dass diese Schicht bei erhöhter Temperatur, vorzugsweise 30 bis 200 °C, besonders bevorzugt 70 bis 120 °C, und erhöhtem Druck, vorzugsweise bei einem Druck von 1 bis 20 bar, besonders bevorzugt von 1 bis 5 bar, mit einem weiteren Substrat verbunden werden kann. Im Allgemeinen wird eine derartige Verbindung (Siegelung) unter Druck- und/oder Temperaturerhöhung vorgenommen, nachdem das zu verpackende Gut eingebracht worden ist.

Als siegelbare Schicht eignen sich alle Polymere und Polymersysteme, die siegelbar sind, d. h. die ausgebildete Siegelschicht kann bei ausreichenden Drücken und Temperaturen mit einer anderen Schicht verschweißt, d. h. dauerhaft verbunden, werden. Diese andere Schicht kann aus dem gleichen Polymer oder einem anderen Polymer bestehen. "Dauerhaft verbunden" bedeutet, dass die Verbindung nicht zerstörungsfrei gelöst werden kann.

Die siegelbare Schicht wird vorzugsweise von Polymeren gebildet, welche bei Raumtemperatur (21 °C, 1 bar) blockfest sind, d. h. der ausgebildete Polymerfilm ist nicht klebrig. Besonders bevorzugt ist das Polymer bis +50 °C blockfest.

Die siegelbare Schicht c) besteht vorzugsweise aus einem Polymer, welches zu mindestens 20 Gew.-%, insbesondere zu mindestens 40 Gew.-%, besonders bevorzugt zu mindestens 60 Gew.-%, insbesondere bevorzugt zu wenigstens 80 Gew.-% und speziell zu wenigstens 90 Gew.-% oder zu wenigstens 95 Gew.-% oder zu wenigstens 99 Gew.-% aus wenigstens einem C₂-C₆-Olefin aufgebaut ist. Derartige Polymere werden im Folgenden kurz Polyolefine genannt. Als C₂-C₆-Olefine seien insbesondere Ethylen oder Propylen genannt. Bevorzugte Polymere für die siegelbare Schicht sind Homopolymere der Olefine, insbesondere Polyethylen bzw. Polypropylen, oder deren Copolymere.

Besonders bevorzugt ist die siegelbare Schicht aus einem Polymer aufgebaut, welches zu mehr als 60 Gew.-% aus Ethylen besteht. Insbesondere bevorzugt besteht die siegelbare Schicht aus Polyethylen (PE).

Für die siegelbare Schicht können niedermolekulare Homo- oder Copolymere der vorgenannten Olefine verwendet werden, z. B. PE-Wachse, wie sie in WO 2007/012621 beschrieben sind. Geeignet sind auch hochmolekulare Polymere, z. B. Polyethylen (PE), die thermoplatisch verarbeitbar sind und z. B. in Form von Folien extrudiert werden können.

Polyolefine sind insbesondere mit sich selbst siegelbar, d. h. die andere Schicht, mit der eine dauerhafte Verbindung hergestellt werden soll, ist vorzugsweise aus dem gleichen Material.

Die siegelbare Schicht c) kann auch aus Polymeren bestehen, die aus den oben genannten Monomeren des Klebstoff-Polymeren aufgebaut sind; das erhaltene Polymer muss jedoch blockfest sein, ist also kein Haftklebstoff. Geeignet sind insbesondere Polymere, welche die oben genanten Acrylsäureester oder Methacrylsäureester (im Folgenden (Meth)acrylmonomere) und/oder vinylaromatischen Monomere bzw. Mischungen derartiger Monomere einpolymerisiert enthalten. Geeignete Polymere bestehen z. B. zu mehr als 60 Gew.-% aus (Meth)acrylmonomeren und vinylaromatischen Monomeren. Unter dem Handelsnamen Johncryl^{®} sind wässrige Polymerlösungen von derartigen Polyacrylaten bzw. Copolymeren von Acrylaten und Styrol bekannt, die für die siegelbare Schicht verwendet werden können. Die vorstehenden Polymere eignen sich insbesondere für die Versiegelung mit Schichten aus anderen Polymeren, insbesondere Schichten aus Polyestern, z. B. PET, Polystyrol oder Polyvinylchlorid.

Die Dicke der siegelbaren Schicht beträgt in der Regel 5 bis 100 µm, insbesondere 10 bis 80 µm und speziell 15 bis 50 µm.

Die Herstellung der erfindungsgemäßen Mehrschichtfolien kann in Analogie zu bekannten Verfahren zur Herstellung von Mehrschicht-Folien erfolgen, wobei das Verfahren eine Bestrahlung des als Beschichtung aufgebrachten Acrylat-Polymeren umfasst.

In der Regel umfasst ein solches Verfahren die die folgenden Schritte:
i. Aufbringen eines Acrylat-Polymeren, wie hier beschrieben, als Beschichtung auf die Trägerfolie;
ii. Bestrahlung der Beschichtung mit UV-Strahlung; und
iii. Aufbringen der siegelbaren Schicht auf die in Schritt i oder ii. erhaltene Beschichtung, d. h. das Aufbringen der siegelbaren Schicht erfolgt vor oder nach der Bestrahlung in Schritt ii.

Das Aufbringen des Acrylat-Polymeren auf die Trägerfolie kann in üblicher Weise erfolgen, wobei das Acrylat-Polymer typischerweise in flüssiger Form aufgebracht wird. Beispielsweise kann man das Acrylat-Polymer aus einer Lösung des Acrylat-Polymeren in einem der vorgenannten organischen Lösungsmittel auf den Träger auftragen und die so erhaltene Beschichtung trocknen.

Vorzugsweise wird das Acrylat-Polymer lösungsmittelfrei bei erhöhter Temperatur als "Schmelze" auf den Träger aufgebracht. Bevorzugt erfolgt das Aufbringen der Schmelze des Acrylat-Polymeren bei einer Temperatur im Bereich von 80 bis 250 °C, insbesondere bei einer Temperatur im Bereich von 100 bis 180 °C. Vorzugsweise weist die Schmelze des Acrylat-Polymeren eine Nullviskosität im Bereich von 10 bis 200 Pa·s, insbesondere im Bereich von 20 bis 150 Pa·s auf.

Das Acrylat-Polymer kann als Formulierung mit Haftklebstoffadditiven auf den Träger aufgebracht werden. Bevorzugt wird es als solche, d. h. im Wesentlichen frei von Haftklebstoffadditiven, auf den Träger aufgebracht.

Die Menge an Acrylat-Polymer wird bei Aufbringen in der Regel so gewählt, dass eine Beschichtungsstärke von 1 bis 50 g/m², insbesondere 2 bis 40 g/m² und speziell 5 bis 30 g/m² Haftklebstoff bzw. Acrylat-Polymer resultiert.

Die beim Aufbringen erhaltene Beschichtung wird, gegebenenfalls nach einem Trocknungsschritt zur Entfernung von Lösungsmittel, mit UV-Strahlung bestrahlt, um eine Vernetzung des Acrylat-Polymeren zu erreichen. Bevorzugt erfolgt eine Bestrahlung mit UV-Licht im Wellenlängenbereich von 220 bis 350 nm, insbesondere im Bereich von 250 bis 300 nm. Bevorzugt wird eine Strahlungsdosis im Bereich von 0,5 bis 20 mJ/cm², insbesondere 1 bis 15 mJ/cm² und speziell 1,5 bis 10 mJ/cm² oder 1,5 bis 8 mJ/cm² gewählt.

Die Bestrahlung der Beschichtung kann direkt oder indirekt erfolgen. Im Falle der direkten Bestrahlung wird die beschichtete Seite vor dem Aufbringen der siegelbaren Schicht bestrahlt, d. h. die mit dem Acrylatpolymeren beschichtete Seite der Trägerfolie weist in Richtung der Strahlungsquelle. Im Falle der indirekten Bestrahlung erfolgt die Bestrahlung entweder durch die Trägerfolie, d. h. nicht beschichtete Seite der Trägerfolie weist in Richtung der Strahlungsquelle, oder durch die siegelbare Schicht.

Bevorzugt ist die indirekte Bestrahlung durch die siegelbare Schicht, insbesondere wenn es sich bei der siegelbaren Schicht um eine Polyolefinschicht, wie zuvor definiert handelt und besonders bevorzugt, wenn die siegelbare Schicht aus einem Polymer aufgebaut, welches zu mehr als 60 Gew.-%, insbesondere zu wenigstens 80 Gew.-%, besonders bevorzugt zu wenigstens 90 Gew.-% oder zu wenigstens 95 Gew.-% oder zu wenigstens 99 Gew.-% aus Ethylen besteht. Insbesondere bevorzugt besteht die siegelbare Schicht aus Polyethylen (PE).

Die indirekte Bestrahlung durch die Trägerfolie ist naturgemäß dann geeignet, wenn die Trägerfolie transparent ist, insbesondere wenn es sich um eine transparente Polymerfolie, z. B. eine transparente Polyolefin-, Polyester- oder Polyacetatfolie, insbesondere um eine transparente Polyolefinfolie und speziell um eine transparente Polyethylen- oder Polypropylenfolie handelt.

Auf die so erhaltene Haftklebstoffschicht wird unmittelbar (oder ggf. nach Aufbringen einer Barriereschicht) eine siegelbare Schicht aufgebracht. Die siegelbare Schicht kann auch auf die unvemetzte Beschichtung aufgebracht und anschließend eine Bestrahlung mit UV-Licht durchgeführt werden, was erfindungsgemäß bevorzugt ist.

Die siegelbare Schicht kann als Polymerfolie auf die Haftklebstoffschicht aufkaschiert werden. Die Siegelschicht c) kann aber auch aus Polymerlösungen oder Polymerdispersionen hergestellt werden, wobei Polymerlösungen oder Polymerdispersionen in Wasser bevorzugt sind. Die siegelbare Schicht bildet sich dann durch Verfilmung und Entfernung des Wassers aus den Polymerlösungen oder Polymerdispersionen.

Vorzugsweise erfolgt das Aufbringen der siegelbaren Schicht durch Aufbringen einer Folie des Polymeren, welche die siegelbare Schicht bildet. Das Aufbringen der Folie erfolgt durch übliche Techniken des Kaschierens, typischerweise bei Temperaturen unterhalb der Siegeltemperatur, z. B. bei Temperaturen im Bereich von 20 bis 70 °C. Der Druck liegt typischerweise im Bereich von 1 bis 20 N/cm².

Die erfindungsgemäßen Mehrschichtfolien eignen sich in besonderer Weise zur Herstellung von wiederverschließbaren Verpackungen. Dementsprechend betrifft die vorliegende Erfindung wiederverschließbare Verpackungen, die wenigstens eine der hier beschriebenen Mehrschichtfolien umfassen.

Die efindungsgemäß verwendeten wiederverschließbaren Verpackungen, weisen in der Regel wenigstens zwei miteinander über eine Siegelschicht verbundene Verpackungselemente auf, wobei eines der Verpackungselemente eine erfindungsgemäße Mehrschichtfolie ist. In der Regel ist das eine Verpackungselement ein Behälter, der zur Aufnahme des zu verpackenden Gutes bestimmt und ausgestaltet ist und das weitere Verpackungselement ein folienartiger Verschluss (Verschlussfolie) für den Behälter.

Wird die erfindungsgemäße Mehrschichtfolie als Verschlussfolie verwendet, so handelt es sich bei dem weiteren Verpackungselement um den Behälter; wird die erfindungsgemäße Mehrschichtfolie als Behälter verwendet, so handelt es sich bei dem weiteren Verpackungselement um die Verschlussfolie.

Insbesondere weist das weitere Verpackungselement zumindest an den Stellen, an denen eine Verbindung mit der erfindungsgemäßen Mehrschichtfolie erfolgen soll, d. h. an der Siegelnaht, eine äußere Beschichtung aus einem Material auf, welches mit der siegelbaren Schicht c) der Mehrschichtfolie siegelbar ist, bzw. besteht aus einem derartigen Material (siehe obige Ausführungen zur siegelbaren Schicht).

In einer bevorzugten Ausführungsform bildet die Mehrschichtfolie eine Verschlussfolie für einen Behälter. Der Behälter kann dann aus beliebigen Materialien bestehen, beispielsweise aus Glas, Papier, Metall oder Kunststoff oder aus Verbundmaterialien, und bezüglich seiner Form beliebig ausgestaltet sein. Gemäß einer bevorzugten Ausführungsform handelt es sich um einen Behälter aus Kunststoff, insbesondere aus einem Polyester, z. B. PET, wobei der Behälter an den mit der Verschlussfolie zu siegelnden Stellen, insbesondere am Rand, mit einer siegelbaren Schicht, z. B. Polyethylen, beschichtet ist. Vorzugsweise ist der Behälter als Schale oder Dose ausgestaltet und weist in den zu versiegelnden Bereichen eine Auflagefläche für die Verschlussfolie auf.

Gemäß einer bevorzugten Ausgestaltung handelt es sich bei dem Behälter um einen Kunststoffbehälter aus einem Kunststofffolienmaterial, z. B. um einen Behälter aus einer mit Polyethylen oder einem anderen Siegelmaterial beschichteten Kunststofffolie, z. B. einer mit Polyethylen oder einem anderen Siegelmaterial beschichteten Polyesterfolie. Derartige Behälter werden im Allgemeinen durch Tiefziehen einer entsprechenden Folie hergestellt. Die Dicke des Behältermaterials liegt dann typischerweise im Bereich von 30 bis 500 µm ohne Siegelschicht, bzw. im Bereich von 50 bis 500 µm mit Siegelschicht.

In einer anderen bevorzugten Ausführungsform bildet die Mehrschichtfolie den Behälter. Vorzugsweise ist der Behälter als Schale oder Dose ausgestaltet und weist in den zu versiegelnden Bereichen eine Auflagefläche für die Verschlussfolie auf. Gemäß einer bevorzugten Ausgestaltung handelt es sich bei dem Behälter um einen Kunststoffbehälter aus einer erfindungsgemäßen Mehrschichtfolie, bei der der Träger eine Polyesterfolie, insbesondere eine PET-Folie ist, die mit einer erfindungsgemäßen Haftklebstoffschicht und einer siegelbaren Schicht, insbesondere einer Polyethylenschicht, ausgestattet ist. Derartige Behälter werden im Allgemeinen durch Tiefziehen einer entsprechenden Folie hergestellt. Die Dicke des Behältermaterials liegt dann typischerweise im Bereich von 30 bis 500 µm ohne Siegelschicht, bzw. im Bereich von 50 bis 500 µm mit Siegelschicht. Der Verschlussfolie kann dann aus beliebigen Materialien bestehen, beispielsweise aus Papier, Metall oder Kunststoff oder aus Verbundmaterialien. Gemäß einer bevorzugten Ausführungsform handelt es sich um eine Verschlussfolie aus Kunststoff, insbesondere aus einem Polyester, z. B. PET, wobei die Verschlussfolie mit einer siegelbaren Schicht, z. B. Polyethylen, beschichtet ist.

Der Erstverschluss der wiederverschließbaren Verpackung, d. h. die Siegelung bzw. das Zusammenpressen der beiden Verpackungselemente erfolgt vorzugsweise bei einem Druck von 1 bis 20 bar, besonders bevorzugt von 1 bis 5 bar. Die Temperatur beträgt vorzugsweise 70 bis 250 °C, besonders bevorzugt 100 bis 200 °C; die Dauer ist vorzugsweise 0,5 bis 5 Sekunden, insbesondere 1 bis 2 Sekunden.

Die erfindungsgemäßen Verpackungen sind zur Aufnahme beliebiger Verpackungsgüter geeignet. Besonders vorteilhaft eignen sie sich zur Verpackung von Lebensmitteln, z. B. Fleisch-, Wurst-, oder Käseprodukten.

Die unter Verwendung der erfindungsgemäßen Mehrschichtfolien hergestellten Verpackungen sind wiederverschließbar. Beim erstmaligen Öffnen der Verpackung reißt nicht die Siegelnaht, sondern die schwächere Haftklebstoffschicht, so dass danach zumindest eine der Kontaktflächen der beiden getrennten Verpackungselemente im Kontaktbereich eine Haftklebstoffschicht aufweist. Kommt es beim Aufreißen zu einem Kohäsionsbruch in der Haftklebstoffschicht, sind beide Flächen klebrig. Die Verpackung ist sehr oft wiederverschließbar, wobei die Festigkeit nach wiederholtem Verschließen kaum nachlässt. Die Maximalkraft beim 2. und weiteren Öffnen ist jedoch vergleichsweise gering, was die Handhabbarkeit vereinfacht.

Die folgenden Beispiele dienen der Veranschaulichung der Erfindung und sind nicht einschränkend zu verstehen.

### Herstellungsbeispiele:

Die Bestimmung des K-Wertes erfolgte durch Bestimmung einer 1 gew.-%igen Lösung des Acrylat-Polymeren in Tetrahydrofuran (bei 21 °C).

Die angegebenen Nullviskositäten beziehen sich auf die Nullviskositäten der reinen Acrylat-Polymere und wurden bei 130 °C mit einem Paar Physica MCR100 Rheometer gemessen, Auswertung nach Carreau-Gahleitner.

Als Fotoinitiator wurde 4-(4-(Benzoyl)phenoxycarbonyloxy)butyl)acrylat (Verbindung der Formel I mit R¹ = Butan-1,4-diyl, R² = H und R³ = Phenyl) eingesetzt.

### Beispiel 1:

In einer Polymerisationsapparatur bestehend aus Glasreaktor, Zulaufgefäßen, Rückflusskühler, Rührer und Stickstoffeinlass wurden in leichtem Stickstoffstrom 94,6 g iso-Butanol vorgelegt und auf 95 °C erwärmt. Hierzu gab man 60,6 g Monomermischung und 7,1 g Initiatorlösung und polymerisierte 10 min bei dieser Temperatur. Dann gab man innerhalb von 3 h 1150,6 g Monomermischung und innerhalb von 3 h 15 min 64,4 g Initiatorlösung zu. Anschließend gab man eine Lösung von 2,4 g tert.-Butylperoctoat in 36,2 g iso-Butanol innerhalb von 5 min zu, erhöhte die Temperatur auf 120 °C und polymerisierte weitere 60 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 99,8%; | K-Wert: 52,1; Nullviskosität bei 130°C: 72,1 Pa·s |
| Monomermischung: | 88 Gew.-% Ethylhexylacrylat, 9 Gew.-% Methylmethacrylat, 2,5 Gew.-% Acrylsäure, 0,5 Gew.-% Fotoinitiator |
| Initiatorlösung: | 1,09 g tert.-Butylperoctoat und 70,5 g iso-Butanol |

### Beispiel 2:

In einer Polymerisationsapparatur bestehend aus Glasreaktor, Zulaufgefäßen, Rückflusskühler, Rührer und Stickstoffeinlass wurden in leichtem Stickstoffstrom 283 g Methylethylketon (MEK) vorgelegt und auf 80 °C erwärmt. Hierzu gab man 60,6 g Monomermischung und 6,06 g Initiatorlösung und polymerisierte 10 min bei dieser Temperatur. Dann gab man innerhalb von 3 h 1150,6 g Monomermischung und innerhalb von 3 h 15 min 54,6 g Initiatorlösung zu. Anschließend gab man eine Lösung von 3,2 g tert.-Butylperpivalat (75%ig in Mineralöl) in 37,3 g MEK innerhalb von 5 min zu, erhöhte die Temperatur auf 85 °C und polymerisierte weitere 60 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 100%; | K-Wert: 51,8; Nullviskosität bei 130 °C: 66,9 Pa·s |
| Monomermischung: | 88 Gew.-% Ethylhexylacrylat, 9 Gew.-% Methylmethacrylat, 2,5 Gew.-% Acrylsäure, 0,5 Gew.-% Fotoinitiator |
| Initiatorlösung: | 3,84 g tert. Butylperpivalat (75%ig in Mineralöl) und 56,7 g MEK |

### Beispiel 3:

In einer Polymerisationsapparatur bestehend aus Glasreaktor, Zulaufgefäßen, Rückflusskühler, Rührer und Stickstoffeinlass wurden in leichtem Stickstoffstrom 283 g Methylethylketon (MEK) vorgelegt und auf 80 °C erwärmt. Hierzu gab man 120 g Monomermischung und 5,99 g Initiatorlösung und polymerisierte 10 min bei dieser Temperatur. Dann gab man innerhalb von 3 h 1086 g Monomermischung und 53,9 g Initiatorlösung zu. Anschließend gab man eine Lösung von 23,2 g tert.-Butylperpivalat (75%ig in Mineralöl) in 37,3 g MEK innerhalb von 5 min zu, erhöhte die Temperatur auf 85 °C und polymerisierte weitere 60 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 100%; | K-Wert: 51,9; Nullviskosität bei 130 °C: 64,8 Pa·s |
| Monomermischung: | 88,2 Gew.-% Ethylhexylacrylat, 9 Gew.-% Methylmethacrylat, 2,5 Gew.-% Acrylsäure, 0,3 Gew.-% Fotoinitiator |
| Initiatorlösung: | 3,24 g tert.-Butylperpivalat (75%ig in Mineralöl) und 56,7 g MEK |

### Beispiel 4:

In einer Polymerisationsapparatur bestehend aus Glasreaktor, Zulaufgefäßen, Rückflusskühler, Rührer und Stickstoffeinlass wurden in leichtem Stickstoffstrom 148 g Methylethylketon (MEK) vorgelegt und auf 80 °C erwärmt. Hierzu gab man 121 g Monomermischung und 5,99 g Initiatorlösung und polymerisierte 10 min bei dieser Temperatur. Dann gab man innerhalb von 3 h 1090 g Monomermischung und 53,9 g Initiatorlösung zu. Anschließend gab man eine Lösung von 3,2 g tert.-Butylperpivalat (75%ig in Mineralöl) in 37,3 g MEK innerhalb von 5 min zu, erhöhte die Temperatur auf 85 °C und polymerisierte weitere 60 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 100%; | K-Wert: 53; Nullviskosität bei 130°C: 46,7 Pa·s |
| Monomermischung: | 97 Gew.-% Ethylhexylacrylat, 2,5 Gew.-% Acrylsäure, 0,5 Gew.-% Fotoinitiator |
| Initiatorlösung: | 3,2 g tert.-Butylperpivalat (75%ig in Mineralöl) und 56,7 g MEK |

### Beispiel 5:

In einer Polymerisationsapparatur bestehend aus Glasreaktor, Zulaufgefäßen, Rückflusskühler, Rührer und Stickstoffeinlass wurden in leichtem Stickstoffstrom 283 g Methylethylketon (MEK) vorgelegt und auf 80 °C erwärmt. Hierzu gab man 121,1 g Monomermischung und 5,99 g Initiatorlösung und polymerisierte 10 min bei dieser Temperatur. Dann gab man innerhalb von 3 h 1090,3 g Monomermischung und 53,9 g Initiatorlösung zu. Anschließend gab man eine Lösung von 3,2 g tert.-Butylperpivalat (75%ig in Mineralöl) in 37,3 g MEK innerhalb von 5 min zu, erhöhte die Temperatur auf 85 °C und polymerisierte weitere 60 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 100%; | K-Wert: 53; Nullviskosität bei 130°C: 69,1 Pa·s |
| Monomermischung: | 88 Gew.-% Ethylhexylacrylat, 9 Gew.-% Methylmethacrylat, 2,5 Gew.-% Acrylsäure, 0,5 Gew.-% Fotoinitiator |
| Initiatorlösung: | 3,2 g tert.-Butylperpivalat (75%ig in Mineralöl) und 56,7 g MEK |

### Beispiel 6:

In einer Polymerisationsapparatur bestehend aus Glasreaktor, Zulaufgefäßen, Rückflusskühler, Rührer und Stickstoffeinlass wurden in leichtem Stickstoffstrom 283 g Methylethylketon (MEK) vorgelegt und auf 80 °C erwärmt. Hierzu gab man 121,1 g Monomermischung und 5,9 g Initiatorlösung und polymerisierte 10 min bei dieser Temperatur. Dann gab man innerhalb von 3 h 1090 g Monomermischung und 53,3 g Initiatorlösung zu. Anschließend gab man eine Lösung von 3,2 g tert.-Butylperpivalat (75%ig in Mineralöl) in 37,3 g MEK innerhalb von 5 min zu, erhöhte die Temperatur auf 85 °C und polymerisierte weitere 45 min. Das Lösungsmittel wurde unter Vakuum abdestilliert, die Temperatur wurde dabei auf 135 °C erhöht. Zum Schluss wurde bei bestem Vakuum noch 1 h bei 135 °C entgast und das Polymer nach dem Belüften abgefüllt.

| | |
|---|---|
| Feststoffgehalt: 100%; | K-Wert: 51,4; Nullviskosität bei 130°C: 49,8 Pa·s |
| Monomermischung: | 88 Gew.-% Ethylhexylacrylat, 11,5 Gew.-% Methylmethacrylat, 0,5 Gew.-% Fotoinitiator |
| Initiatorlösung: | 2,56 g tert.-Butylperpivalat (75%ig in Mineralöl) und 56,7 g MEK |

### Anwendungstechnische Prüfung:

1 a. Herstellung der Mehrschichtfolie (Allgemeine Vorschrift a):
Eine Polyesterfolie (Folie 1: PET) mit einer Schichtdicke von 36 µm wurde mit dem jeweiligen Polymeren bei einer Temperatur von 110 °C mittels eines Balkenrakels in einer Menge von 17 g/m² beschichtet. Das so beschichtete Substrat wurde nach dem Abkühlen mit UV-Licht einer Quecksilbermitteldruckdampflampe (höchste Intensität bei einer Wellenlänge von 250 bis 260 nm) mit der jeweils angegebenen UV Dosis bestrahlt. Dann wurde die beschichtete Folie mit einer 25 µm starken Siegelfolie (Folie 2: PE) bei 25 °C angerollt und laminiert.
Schichtaufbau der Folie: PET-Träger / Haftklebstoffschicht / PE-Siegelschicht
1 b. Herstellung der Mehrschichtfolie (Allgemeine Vorschrift b):
Eine Polyesterfolie (Folie 1: PET) mit einer Schichtdicke von 36 µm wurde mit dem jeweiligen Polymeren bei einer Temperatur von 110 °C mittels eines Balkenrakels in einer Menge von 17 g/m² beschichtet. Das so beschichtete Substrat wurde nach dem Abkühlen mit einer 25 µm starken Siegelfolie (Folie 2: PE) bei 25 °C angerollt und laminiert. Dann wurde das Laminat mit UV-Licht einer Quecksilbermitteldruckdampflampe (höchste Intensität bei einer Wellenlänge von 250 bis 260 nm) durch die Siegelschicht mit der jeweils angegebenen UV Dosis bestrahlt.
Schichtaufbau der Folie: PET-Träger / Haftklebstoffschicht / PE-Siegelschicht
Nach der Herstellungsvorschrift 1 a. wurden Mehrschichtfolien unter Verwendung der Polymere aus den Beispielen 1, 3 bzw. 5 hergestellt. Nach der Herstellungsvorschrift 1 b. wurde eine Mehrschichtfolie unter Verwendung des Polymeren aus Beispiel 6 hergestellt.
2. Sieglung:
Die beschriebene Mehrschichtfolie wurde mit der PE-Seite einer PET/PE Verbundfolie (Folie 3: Dicke 300 µm) versiegelt. Die Mehrschichtfolie und Folie 3 wurden dazu 1,5 Sek. bei 3 bar und 145 °C (Erhitzung von Seite der Folie 1) miteinander verpresst. Der erhaltene, versiegelte Verbund hatte eine Breite von ca. 10 mm.
Abweichend davon wurde für Beispiel 6 die Siegelung folgendermaßen durchgeführt: Die Mehrschichtfolie wurde mit der PE-Seite einer PET/PE Verbundfolie (Folie 3: Dicke 65 µm) versiegelt. Die Mehrschichtfolie und Folie 3 wurden dazu 3 Sek. bei 3 bar und 180 °C (Erhitzung von Seite der Folie 1) miteinander verpresst. Der erhaltene, versiegelte Verbund hatte eine Breite von ca. 10 mm.
Schichtaufbau des Verbunds: PET-Träger / Haftklebstoffschicht / PE-Siegelschicht / PE / PET
3. Prüfung des Verbunds:
Der hergestellte, gesiegelte Verbund wurde einer Auftrennungsprüfung in Anlehnung an Finat Nr. 1 unterzogen. Dabei wurden Folie 3 und die Mehrschichtfolie mit einer konstanten Abzugsgeschwindigkeit von 300 mm/min in einem Winkel von 180° mehrfach getrennt. Nach jeder Trennung erfolgte eine Wiederverklebung der Folie 3 mit der Mehrschichtfolie mittels einem Anrollgerät (Gewicht 2 kg, Geschwindigkeit 100 mm/sek).
Die Ergebnisse sind in den folgenden Tabellen zusammengestellt. Hierbei steht K für einen kohäsiven Bruch in die Haftschicht und A bzw. A2 für einen adhäsiven Bruch zwischen dem Klebstoff und der PET-Folie.

| Polymer aus Beispiel. 1, bestrahlt mit 5 mJ/cm² Bestrahlung vor dem Laminieren mit PE-Siegelfolie | | | |
|---|---|---|---|
| Anzahl der erfolgten Auftrennungen | mittlere Kraft [N/10 mm] | Maximalkraft [N/10 mm] | Bruchbild |
| 1 | 7,9 | 11,2 | K |
| 2 | 2,6 | 3,5 | K |
| 3 | 2,7 | 3,8 | K |
| 4 | 2,2 | 3,3 | K |

| Polymer aus Beispiel 1, bestrahlt mit 5 mJ/cm² Bestrahlung vor dem Laminieren mit PE-Siegelfolie | | | |
|---|---|---|---|
| Anzahl der erfolgten Auftrennungen | mittlere Kraft [N/10 mm] | Maximalkraft [N/10 mm] | Bruchbild |
| 5 | 2,2 | 3,4 | K |
| 6 | 1,7 | 3,0 | K |
| 7 | 1,6 | 2,7 | K |
| 8 | 1,2 | 2,3 | K |
| 9 | 1,1 | 2,0 | K |
| 10 | 0,9 | 1,6 | K |

| Polymer aus Beispiel 3, bestrahlt mit 5 mJ/cm² Bestrahlung vor dem Laminieren mit PE-Siegelfolie | | | |
|---|---|---|---|
| Anzahl der erfolgten Auftrennungen | mittlere Kraft [N/10 mm] | Maximalkraft [N/10 mm] | Bruchbild |
| 1 | 3,1 | 3,3 | A2 |
| 2 | 0,9 | 1,2 | A2 |
| 3 | 0,8 | 1,0 | A2 |
| 4 | 0,9 | 1,0 | A2 |
| 5 | 0,9 | 1,0 | A2 |
| 6 | 0,8 | 0,9 | A2 |
| 7 | 0,8 | 0,9 | A2 |
| 8 | 0,8 | 0,9 | A2 |
| 9 | 0,8 | 0,9 | A2 |
| 10 | 0,8 | 0,9 | A2 |

| Polymer aus Beispiel 5, bestrahlt mit 5 mJ/cm² Bestrahlung vor dem Laminieren mit PE-Siegelfolie | | | |
|---|---|---|---|
| Anzahl der erfolgten Auftrennungen | mittlere Kraft [N/10 mm] | Maximalkraft [N/10mm] | Bruchbild |
| 1 | 3,2 | 3,7 | A2 |
| 2 | 0,8 | 1,5 | A2 |
| 3 | 0,6 | 1,1 | A2 |
| 4 | 0,6 | 1,1 | A2 |
| 5 | 0,7 | 1,2 | A2 |
| 6 | 0,7 | 1,2 | A2 |
| 7 | 0,7 | 1,2 | A2 |
| 8 | 0,7 | 1,1 | A2 |
| 9 | 0,6 | 1,1 | A2 |
| 10 | 0,6 | 1,1 | A2 |

| Polymer aus Beispiel 6, bestrahlt mit 10 mJ/cm²; Bestrahlung nach dem Laminieren mit PE-Siegelfolie, durch die PE-Siegelfolie | | | |
|---|---|---|---|
| Anzahl der erfolgten Auftrennungen | mittlere Kraft [N/10 mm] | Maximalkraft [N/10 mm] | |
| 1 | 2,7 | 3,5 | |
| 2 | 0,5 | 0.8 | |
| 3 | 0,5 | 0,7 | |
| 4 | 0,4 | 0,7 | |
| 5 | 0,4 | 0,8 | |
| 6 | 0,4 | 0,6 | |
| 7 | 0,4 | 0,7 | |
| 8 | 0,4 | 0,7 | |
| 9 | 0,4 | 0,5 | |
| 10 | 0,4 | 0,7 | |

## Patentansprüche

1. Verwendung von Acrylat-Polymeren mit einer Glasübergangstemperatur < -20°C, bestimmt nach ASTM-D 3418/82, die 1 bis 30 mmol einpolymerisierten Fotoinitiator pro kg Acrylat-Polymer enthalten, zur Herstellung von Haftklebstoffschichten in wiederverschließbaren Verpackungen, wobei das Acrylat-Polymer aus monoethylenisch ungesättigten Monomeren M und dem Fotoinitiator aufgebaut ist, wobei die Monomere M umfassen:
a) wenigstens 80 Gew.-%, bezogen auf das Gesamtgewicht des Acrylat-Polymeren, Monomere A, ausgewählt unter C₃-C₂₀-Alkylacrylaten,
b) 1 bis 20 Gew.-% Monomere B, ausgewählt unter C₁-C₄-Alkylmethacrylaten, Methylacrylat und Ethylacrylat;
c) bis zu 10 Gew.-% nicht-aromatische, monoethylenisch ungesättigte Monomere C, die ausgewählt sind unter monoethylenisch ungesättigten C₃-C₈-Monocarbonsäuren, Amiden monoethylenisch ungesättigter C₃-C₈-Monocarbonsäuren, monoethylenisch ungesättigten C₄-C₈-Dicarbonsäuren, den Mono-C₁-C₂₀-alkylestern monoethylenisch ungesättigter C₄-C₈-Dicarbonsäuren, und den Hydroxyalkylestem monoethylenisch ungesättigter C₃-C₈-Monocarbonsäuren;
wobei sich die Gewichtsanteile der Monomere A, B und C zu 100 Gew.-% addieren.

2. Verwendung nach Anspruch 1, wobei die Acrylat-Polymere bei 130 °C eine Nullviskosität im Bereich von 10 bis 200 Pa·s aufweisen.

3. Verwendung nach einem der vorhergehenden Ansprüche, wobei die Acrylat-Polymere einen K-Wert nach Fikentscher im Bereich von 20 bis 90, gemessen bei 21 °C als 1 gew.-%ige Lösung in Tetrahydrofuran, aufweisen.

4. Verwendung nach einem der vorhergehenden Ansprüche, wobei der einpolymerisierte Fotoinitiator eine Acetophenon- oder Benzophenon-Gruppe aufweist.

5. Mehrschichtfolie, umfassend:
a) eine Trägerfolie,
b) eine Haftklebstoffschicht, die aus einem durch UV-Strahlung vernetzten, Acrylat-Polymeren gemäß einem der Ansprüche 1 bis 4 gebildet wird, und
c) eine siegelbare Schicht,
wobei die Haftklebstoffschicht zwischen der Trägerfolie und der siegelbaren Schicht angeordnet ist.

6. Mehrschichtfolie gemäß Anspruch 5, wobei es sich bei der Trägerfolie um eine transparente Polymerfolie oder metallisierte Polymerfolie handelt.

7. Mehrschichtfolie gemäß Anspruch 5 oder 6, wobei es sich bei der Trägerfolie um eine Polyolefin- oder Polyesterfolie handelt.

8. Mehrschichtfolie gemäß einem der Ansprüche 5 bis 7, wobei es sich bei der Trägerfolie um eine Polyethylenterephthalat-Folie handelt.

9. Mehrschichtfolie gemäß einem der Ansprüche 5 bis 8, wobei die siegelbare Schicht aus Polyethylen besteht.

10. Mehrschichtfolie gemäß einem der Ansprüche 5 bis 9, wobei die Haftklebstoffschicht eine mittlere Beschichtungsstärke von 1 bis 50 g/m² aufweist.

11. Verfahren zur Herstellung von Mehrschichtfolien gemäß einem der Ansprüche 5 bis 10, umfassend die folgenden Schritte:
i. Aufbringen eines Acrylat-Polymeren gemäß einem der Ansprüche 1 bis 4 als Beschichtung auf die Trägerfolie,
ii. Bestrahlung der Beschichtung mit UV-Strahlung; und
iii. Aufbringen der siegelbaren Schicht auf die in Schritt i. oder ii. erhaltene Beschichtung.

12. Verfahren nach Anspruch 11, wobei das Acrylat-Polymer als Schmelze auf den Träger aufgebracht wird.

13. Verfahren nach Anspruch 11 oder 12, wobei man die Beschichtung mit einer Energie von 0,5 bis 20 mJ/cm² bestrahlt.

14. Wiederverschließbare Verpackung, umfassend wenigstens eine Mehrschichtfolie gemäß einem der Ansprüche 5 bis 10.

15. Verpackung nach Anspruch 14 aus zwei miteinander über eine Siegelschicht verbundenen Verpackungselementen, wobei eines der Verpackungselemente eine Mehrschichtfolie gemäß einem der Ansprüche 7 bis 12 ist.

## Claims

1. The use of an acrylate polymer having a glass transition temperature < -20°C, determined according to ASTM-D 3418/82, comprising 1 to 30 mmol of copolymerized photoinitiator per kg of acrylate polymer, to produce a layer of pressure-sensitive adhesive in a reclosable pack, the acrylate polymer being composed of monoethylenically unsaturated monomers M and the photoinitiator, the monomers M comprising:
a) at least 80% by weight, based on the total weight of the acrylate polymer, of monomers A selected from C₃-C₂₀ alkyl acrylates,
b) 1 to 20% by weight of monomers B selected from C₁-C₄ alkyl methacrylates, methyl acrylate, and ethyl acrylate;
c) up to 10% by weight of nonaromatic, monoethylenically unsaturated monomers C which are selected from monoethylenically unsaturated C₃-C₈ monocarboxylic acids, amides of monoethylenically unsaturated C₃-C₈ monocarboxylic acids, monoethylenically unsaturated C₄-C₈ dicarboxylic acids, the mono-C₁-C₂₀ alkyl esters of monoethylenically unsaturated C₄-C₈ dicarboxylic acids, and the hydroxyalkyl esters of monoethylenically unsaturated C₃-C₈ monocarboxylic acids;
the weight fractions of monomers A, B and C adding up to 100% by weight.

2. The use according to claim 1, the acrylate polymer having at 130°C a zero viscosity in the range from 10 to 200 Pa.s.

3. The use according to any one of the preceding claims, the acrylate polymer having a Fikentscher K value in the range from 20 to 90, measured at 21°C as a 1% strength by weight solution in tetrahydrofuran.

4. The use according to any one of the preceding claims, the copolymerized photoinitiator having an acetophenone or benzophenone group.

5. A multilayer film comprising:
a) a backing film,
b) a layer of pressure-sensitive adhesive formed from an acrylate polymer according to any one of claims 1 to 4, the polymer being crosslinked by UV radiation, and
c) a sealable layer,
the layer of pressure-sensitive adhesive being disposed between the backing film and the sealable layer.

6. The multilayer film according to claim 5, the backing film being a transparent polymer film or metallized polymer film.

7. The multilayer film according to claim 5 or 6, the backing film being a polyolefin film or polyester film.

8. The multilayer film according to any one of claims 5 to 7, the backing film being a polyethylene terephthalate film.

9. The multilayer film according to any one of claims 5 to 8, the sealable layer being composed of polyethylene.

10. The multilayer film according to any one of claims 5 to 9, the layer of pressure-sensitive adhesive having an average coating thickness of 1 to 50 g/m².

11. A method of producing a multilayer film according to any one of claims 5 to 10, comprising the following steps:
i. applying an acrylate polymer according to any one of claims 1 to 4 as a coating to the backing film,
ii. irradiating the coating with UV radiation, and
iii. applying the sealable layer to the coating obtained in step i. or ii.

12. The method according to claim 11, the acrylate polymer being applied as a melt to the backing.

13. The method according to claim 11 or 12, the coating being irradiated with an energy of 0.5 to 20 mJ/cm².

14. A reclosable pack comprising at least one multilayer film according to any one of claims 5 to 10.

15. The pack according to claim 14, comprising two packaging elements connected to one another via a seal layer, one of the packaging elements being a multilayer film according to any one of claims 7 to 12.

## Revendications

1. Utilisation de polymères d'acrylate ayant une température de transition vitreuse < -20 °C, déterminée selon ASTM-D 3418/82, qui contiennent 1 à 30 mmoles de photoamorceur incorporé par polymérisation par kg de polymère d'acrylate, pour la production de couches d'autoadhésif dans des emballages refermables, le polymère d'acrylate étant constitué de monomères M à insaturation monoéthylénique et du photoamorceur, les monomères M comprenant :
a) au moins 80 % en poids, par rapport au poids total du polymère d'acrylate, de monomères A, choisis parmi des acrylates d'alkyle en C₃-C₂₀,
b) 1 à 20 % en poids de monomères B, choisis parmi des acrylates d'alkyle en C₁-C₄, l'acrylate de méthyle et l'acrylate d'éthyle ;
c) jusqu'à 10 % en poids de monomères C à insaturation monoéthylénique, non aromatiques, qui sont choisis parmi des acides monocarboxyliques en C₃-C₈ à insaturation monoéthylénique, des amides d'acides monocarboxyliques en C₃-C₈ à insaturation monoéthylénique, des acides dicarboxyliques en C₄-C₈ à insaturation monoéthylénique, des monoesters alkyliques en C₁-C₂₀ d'acides dicarboxyliques en C₄-C₈ à insaturation monoéthylénique, et les esters hydroxyalkyliques d'acides monocarboxyliques en C₃-C₈ à insaturation monoéthylénique ;
la somme des proportions pondérales des monomères A, B et C étant égale à 100 % en poids.

2. Utilisation selon la revendication 1, dans laquelle les polymères d'acrylate présentent à 130 °C une viscosité à cisaillement nul de 10 à 200 Pa.s.

3. Utilisation selon l'une quelconque des revendications précédentes, dans laquelle les polymères d'acrylate présentent un indice K selon Fikentscher dans la plage de 20 à 90, mesuré à 21 °C en solution aqueuse à 1 % en poids dans du tétrahydrofurane.

4. Utilisation selon l'une quelconque des revendications précédentes, dans laquelle le photoamorceur incorporé par polymérisation comporte un groupe acétophénone ou benzophénone.

5. Film multicouche, comprenant :
a) un film de support,
b) une couche d'autoadhésif, qui est formée à partir d'un polymère d'acrylate selon l'une quelconque des revendications 1 à 4, réticulé par rayonnement UV, et
c) une couche scellable,
la couche d'autoadhésif étant disposée entre le film de support et la couche scellable.

6. Film multicouche selon la revendication 5, dans lequel le film de support consiste en un film de polymère transparent ou en un film de polymère métallisé.

7. Film multicouche selon la revendication 5 ou 6, dans lequel le film de support consiste en un film de polyoléfine ou polyester.

8. Film multicouche selon l'une quelconque des revendications 5 à 7, dans lequel le film de support consiste en un film de poly(éthylène-téréphtalate).

9. Film multicouche selon l'une quelconque des revendications 5 à 8, dans lequel la couche scellable est constituée de polyéthylène.

10. Film multicouche selon l'une quelconque des revendications 5 à 9, dans lequel la couche d'autoadhésif présente une épaisseur moyenne de couche de 1 à 50 g/m².

11. Procédé pour la fabrication de films multicouches selon l'une quelconque des revendications 5 à 10, comprenant les étapes suivantes :
i. application d'un polymère d'acrylate selon l'une quelconque des revendications 1 à 4 en tant que revêtement sur le film de support,
ii. irradiation du revêtement avec un rayonnement UV ; et
iii. application de la couche scellable sur le revêtement obtenu dans l'étape i. ou ii.

12. Procédé selon la revendication 11, dans lequel le polymère d'acrylate est appliqué sous forme de masse fondue sur le support.

13. Procédé selon la revendication 11 ou 12, dans lequel le revêtement est irradié avec une énergie de 0,5 à 20 mJ/cm².

14. Emballage refermable, comprenant au moins un film multicouche selon l'une quelconque des revendications 5 à 10.

15. Emballage selon la revendication 14, constitué de deux éléments d'emballage liés l'un à l'autre par une couche de scellement, dans lequel l'un des éléments d'emballage est un film multicouche selon l'une quelconque des revendications 7 à 12.
